# EUROPEAN PATENT APPLICATION

(11) **EP 4 706 878 A1**
(43) Date of publication of application: **11.03.2026**
(21) Application number: 24198586.0
(22) Date of filing: 05.09.2024
(51) Int. Cl.: B23Q 1/00, B23Q 3/08, B25B 11/00

(54) **A CLAMPING SYSTEM FOR HOLDING A WORKPIECE BY VACCUM**

(71) Applicant: System 3R International AB, 162 50 Vällingby (SE)
(72) Inventor: KJELLBERG, Mats, 162 70 Vällingby (SE)
(74) Representative: Arend, Christa

(57) **Abstract**

A clamping system comprises a chuck and a pallet for mounting an object on a clamping surface. The chuck comprises a plurality of chuck reference elements in X-, Y- and Z-directions, wherein the pallet comprises a plurality of pallet reference elements in X-, Y- and Z directions, wherein the pallet includes a pallet locking mechanism and the chuck includes a chuck locking mechanism, wherein in the clamping state, the pallet is clamped to the chuck by interacting the pallet locking mechanism with the chuck locking mechanism and the pallet reference elements are aligned with the chuck reference elements in X-, Y- and Z-directions, wherein the clamping system comprises a vacuum ejector configured to generate a vacuum, wherein the vacuum ejector has an ejector inlet for supplying the pressurized air therein and an ejector vacuum opening for providing the vacuum, wherein a suction opening is provided on the clamping surface and configured to be communicatively connected to the ejector vacuum opening for holding the object positioned on the suction opening by the vacuum generated by the vacuum ejector when the pallet is clamped to the chuck. The clamping system further comprises a back valve, which is configured to be positioned between the suction opening and the ejector vacuum opening in the clamping state, wherein the back valve is configured to operate in an open state or in a closed state, wherein in the open state the vacuum generated by the vacuum ejector passes through the back valve to the suction opening and in the closed state the vacuum is maintained between the back valve and the suction opening for keeping the object on the suction opening without communicative connection between the vacuum ejector and the suction opening.

## Description

### FIELD OF THE INVENTION

The present invention is related to a clamping system for holding a workpiece by vacuum. In particular, the system is applied for mounting in the machine tools.

### BACKGROUND OF INVENTION

Clamping systems are widely used in the field of machining such as milling, turning, electrical discharge machining or laser machining. Such machining processes are conducted by the machines. In order to hold the workpiece or machining tools securely in the machine, clamping systems are essential, because high forces could be applied on the workpiece or on the machining tool.

To ensure the machining efficiency it is relevant to have a clamping system which can quickly clamp and unclamp the workpiece or machine tool without wasting too much machine time. The clamping system includes a chuck and a pallet that can fulfill such requirement. The chuck is normally mounted on the machine table. The workpiece can be mounted on the pallet in advance before the machining. The pallet having the workpiece thereon can be clamped into the chuck and released from the chuck very quickly. Typically, the pallet can be quickly connected to chuck and disconnected from the chuck. Moreover, connecting and disconnecting can even be conducted automatically, for example using robots to save time.

US 9 108 286 B2 discloses a clamping device for a tool or a workpiece. The clamping device comprises at least one chuck and at least one holder for the workpiece or the tool. The holder has an upper part and a hollow tubular extension. The upper part is detachably connected to the hollow tubular extension such that the hollow tubular extension remains hollow when connected to the upper part. The upper part defines a flat upper surface for mounting the tool or workpiece thereon.

US 8 413 973 discloses a clamping fixture comprising a chuck and fixedly securable thereto releasably a clamping pallet. The chuck is provided with four centering pins arranged at the chuck cooperating with centering openings arranged at the clamping pallet such that the clamping pallet when clamped in the chuck is oriented in the X and Y direction.

All these clamping systems provide a quick and secure clamping function between the pallet and the chuck. However, the known clamping systems requires manual works to fix the workpiece on the pallet by fixing means, such as screws. After the machining, the manufactured workpiece must be removed from the pallet by releasing the fixing means. Such manual works is time-consuming.

In many applications, the workpiece must be machined by different machine tools and therefore must be transferred from one machine tool to another machine tool. Using known clamping systems, the whole pallet with the workpiece thereon must be transferred.

### SUMMARY OF THE INVENTION

It is an objective of this invention to provide a clamping system having a chuck and a pallet such that an object can be reliably mounted on the pallet and dismounted from the pallet in a simple manner. In particular, it is an objective to provide a clamping system for holding the object, in which the pallet can be easily removed from the chuck without dismounting the object.

According to the present invention, these objectives are achieved through the features of independent claims. In addition, further advantageous embodiments follow from the dependent claims and the description.

According to the present invention, a clamping system comprises a chuck and a pallet for mounting an object on a clamping surface. The chuck comprises a plurality of chuck reference elements in X-, Y- and Z-directions. The pallet comprises a plurality of pallet reference elements in X-, Y- and Z-directions. The pallet comprises a pallet locking mechanism and the chuck comprises a chuck locking mechanism. In the clamping state, the pallet is clamped to the chuck by interacting with the pallet locking mechanism and the chuck locking mechanism also the pallet reference elements are aligned with the chuck reference elements in X-, Y- and Z-directions.

The clamping system comprises a vacuum ejector configured to generate a vacuum, wherein the vacuum ejector has an ejector inlet for supplying the pressurized air therein and an ejector vacuum opening for providing the vacuum.

A suction opening is provided on the clamping surface and configured to be communicatively connected to the ejector vacuum opening for holding the object positioned on the suction opening by the vacuum generated by the vacuum ejector when the pallet is clamped to the chuck.

The clamping system further comprises a back valve which is configured to be positioned between the suction opening and the ejector vacuum opening in the clamping state. The back valve is configured to operate in an open state or in a closed state. In the open state, the vacuum generated by the vacuum ejector passes through the back valve to the suction opening and in the closed state, the vacuum is maintained between the back valve and the suction opening for keeping the object on the suction opening without communicative connection between the vacuum ejector and the suction opening.

In particular, a sealing is arranged around the suction opening to seal the area around the suction opening. When the object is positioned on the suction opening, a good sealing will prevent the leakage of the vacuum.

In one variant, the clamping surface is the top surface of the pallet. In this variant, a pallet suction opening is formed on the top surface of the pallet serving as the suction opening.

Preferably, the object is directly mounted on the pallet.

In another variant, the clamping system comprises a fixture mounted on the top of the pallet and the fixture has at least one fixture suction opening. In this variant, the clamping surface is the top surface of the fixture, and a fixture suction opening is formed on this surface serving as the suction opening.

Preferably, the object is indirectly mounted on the fixture. Sometimes, the fixture is first mounted on the pallet and the object is mounted on the fixture to provide more flexibility for the custom using the clamping system. The fixture is designed in a manner that the vacuum generated in the pallet can reach the fixture and be distributed at the different area of the fixture.

The clamping systems are utilized to hold the object such as a workpiece to be machined on the machine table or a machining tool applied for machining the workpiece. During machining, high cutting forces may be exerted on the workpiece. These high cutting forces are also transmitted to the clamping system holding the workpiece on the machining table. Therefore, the clamping system must be rigid and able to withstand the applied forces to reliably maintain the positioning of the workpiece during the whole machining. For example, the pallet and/or chuck are made in aluminum or high-alloy steel.

Moreover, it is relevant to precisely position the pallet and the chuck to each other. Therefore, reference elements are essential. A stable and exact reference system can reduce the idle times of the machines. Thus, referencing elements in x-, y- and z-directions are provided such that the position of the pallet is precisely determined. The reference system minimizes setting-up times, increases machine capacity and provides a basis for automated production. Rapid and precise pallet changing can be realized. This ensures a high repeatability respectively high accuracy of the positioning. Preferably, reference elements in Z direction are automatically air-blast cleaned, through nozzles in the Z-references of the chuck. Another advantage is that the workpiece can be transferred from one machine tool to another machine tool without losing the reference. Normally, the chuck is mounted on the machine table and the pallet with the workpiece thereon is clamped to the chuck. If the workpiece must be transferred to another machine tool, the pallet with the workpiece will be removed from the chuck and clamped into another chuck mounted in another machine tool. Due to the referencing elements the positioning reference can be maintained.

Particularly, such clamping system is applied often together with an automation system for automatically changing the pallet. Hence, the pallet locking mechanism and the chuck locking mechanism are designed to realize a fast and reliable clamping.

In one variant, the pallet locking mechanism is provided directly on the pallet. For this type of clamping system, the pallet is directly clamped to the chuck, for example on the top of the chuck.

In another variant, the pallet locking mechanism includes a drawbar with drawbar locking mechanisms such as floating bayonet fitting. For clamping the pallet and the chuck, the drawbar is fixed on the pallet and the drawbar locking mechanism is interacted with the chuck locking mechanism. However, other pallet locking mechanism can also be applied for the clamping system of the present invention.

Normally, a chuck is mounted on the machine table before machining. If the object is a workpiece, it is mounted in advance on the pallet. In particular, a plurality of workpieces is mounted on the plurality of pallets before the machining during the preparation phase, such that the pallet with the workpiece can be quickly changed during the machining to ensure the machining efficiency. However, the workpiece must be manually fixed on the pallet by e.g. screws. Thus, mounting the workpiece on the pallet requires additional time and therefore increases the costs of the machining. Applying vacuum to hold the workpiece is a fast and secure solution. The clamping system having the vacuum ejector in the pallet can further improve the machining efficiency and reduce the costs.

The vacuum ejector is designed to produce vacuum based on e.g. venturi effect. The vacuum ejector has a tubular body. A working fluid is fed into the vacuum ejector and flows through the tubular body having narrow and wide cross-sectional area. The velocity of the working fluid is influenced by the different cross-sectional area. The working fluid flows out of the vacuum ejector with a high velocity and therefore results in low pressure in the vacuum ejector. By this way, the vacuum is generated. The working fluid can be liquid or pressurized air. In a preferred variant, the pressured air is used as the working fluid. Alternatively, nitrogen gas is used as the working fluid. The pressurized air is simpler for handling than liquid. Additionally, pressurized air is supplied into the chuck, because the chuck is a pneumatic chuck. By this way, no additional pipes are required for supplying the working fluid from extern into the vacuum ejector. The vacuum ejector includes the ejector inlet for supplying the working fluid, an ejector outlet for discharging the working fluid and the ejector vacuum opening to provide the generated vacuum.

In one variant, the vacuum ejector and the back valve are embedded in the different parts of the clamping system. In particular, the vacuum ejector is arranged in the pallet, in the chuck, in the fixture or in an additional element. The back valve is embedded in the pallet, in the chuck, in the fixture or in an additional element.

Arranging the back valve in the clamping system provides further advantage that the vacuum can be maintained at the holding position without continuously providing the vacuum by the vacuum ejector. For example, the vacuum ejector is arranged in the chuck and the back valve is embedded in the pallet. In this case, the back valve can be closed such that the pallet can be removed from the chuck without losing the vacuum for continuously holding the workpiece thereon. Consequently, the workpiece can be held safely on the pallet even the vacuum is disconnected from the pallet. This enables the easier and safer change of the pallet. Moreover, it provides more flexibility of the location of the vacuum ejector and the back valve. It is also possible to arrange the back valve in the fixture. In this case, the fixture can be removed from the pallet with the workpiece without losing the vacuum for holding the workpiece.

Alternatively, the vacuum ejector and the back valve are embedded in the same part of the clamping system. In particular, the vacuum ejector and the back valve are embedded in the pallet, in the chuck, in the fixture or in an additional element.

In one variant, at least one vacuum duct is provided in the clamping system and configured to communicatively connect the ejector vacuum opening and the suction opening. There is a plurality of variants where the back valve and the vacuum ejector are arranged in the clamping system. It depends on the type of the clamping system and application. In the clamping state, all the parts of the clamping system are clamped together. The goal of the design is to enable a connection between the ejector vacuum opening and the suction opening on which the object sits or to be held for supplying the vacuum generated by the ejector to the suction opening. Such connection can be achieved by providing vacuum ducts in the parts of the clamping system. In particular, if the vacuum ducts are arranged in the different parts of the clamping system, the clamping system is designed in a way that they are automatically connected together when the pallet is clamped to the chuck.

The back valve is preferably arranged in one of vacuum ducts. When the back valve is open, the vacuum generated by the vacuum ejector passes through the back valve. When the back valve is closed, the vacuum is encapsulated in a part of the channel from the back valve to the workpiece. By this way, the workpiece can be held by the vacuum even no vacuum is supplied by the vacuum ejector.

In one variant, the back valve is configured to automatically operate in the open state when the vacuum is generated by the vacuum ejector and to automatically operate in the closed state when no vacuum is generated by the vacuum ejector.

In one variant, the back valve is configured to automatically operate in the open state when the pressurized air is supplied into the ejector inlet of the vacuum ejector and to automatically operate in the closed state when no pressurized air is supplied into the ejector inlet of the vacuum ejector.

In a preferred variant, the back valve includes a piston and a spring fixed on the bottom surface of the piston, in particular the piston comprises a first part and a sealing element. Preferably, the sealing element is a lip seal. The first part has a cylindrical shape and a bottom surface with the spring fixed thereon. The lip seal has also a cylindrical shape with a hollow, wherein the first part is at least partially inserted in the hollow of the lip seal.

The back valve is arranged in a back valve hole, which is divided into three segments. In particular, the back valve hole is a section of the vacuum duct. The back valve hole is a through hole and it's both ends is seamlessly connected to the vacuum duct. A first segment of the back valve hole is communicatively connected to ejector vacuum opening directly or through channels. A third segment of the back valve hole is communicatively connected to the pallet suction opening or the fixture suction openings directly or through channels. A second segment of the back valve hole connects the first segment and the second segment. The diameters of these segments are different, in particular the second segment has the largest diameter among these three segments for allowing vacuum better passing through the back valve in the open state. When the vacuum is generated, the suction force generated by the vacuum pulls the piston downwardly and compress the spring. The lip seal moves also downwardly and positioned in the second segment of the back valve hole. Since the second segment has larger diameter than the third segment, a gap is formed between the inner surface of the back valve hole and the outer surface of the lip seal. Consequently, a vacuum passage is formed for allowing the vacuum passing through the back valve. When the vacuum is turned off, the spring is released and presses the piston upwardly and the lip seal moves into the third segment of the back valve hole. The diameter of the lip seal is designed in accordance with the inner diameter of the first segment of the back valve hole such that a reliable sealing can be achieved. In this state, the vacuum is encapsuled in the space between the lip seal and the suction opening.

In some embodiments, a release valve is arranged in the clamping system and communicatively connected to the back valve and configured to release the vacuum provided to hold the workpiece, when the release valve is opened. When the vacuum is released, the workpiece is not held by the vacuum anymore. Thus, it can be taken away from the pallet or from the fixture.

It is possible to arrange the release valve in the different parts of the clamping system. It can be embedded in the same part as the back valve or the different part than the back valve.

In some embodiments, the pallet is provided with a recess arranged inside the pallet for arranging the vacuum ejector therein, in particular, the longitudinal direction of the recess is in parallel to the top surface of the pallet. By this way, the vacuum ejector is fully embedded in the pallet.

In some embodiments, the pallet is provided with an air inlet for supplying pressurized air into the vacuum ejector and the air inlet is arranged in a manner that the pressurized air supplied into the chuck enters into the air inlet automatically, when the pallet is clamped to the chuck.

Preferably, the air inlet is arranged on the bottom surface of the pallet. Additionally, an air supply outlet is arranged on the top surface of the chuck and the air inlet of the pallet is automatically aligned with the air supply outlet of the chuck when the pallet is clamped with the chuck. This provides a simple construction for supplying the pressurized air into the pallet. Since no additional pipes must be connected to the pallet from extern, automatic changing of pallet by e.g. a pallet changer is ensured. The air inlet may be a hole. At least one air channel can be formed in the pallet to connect the air inlet to the ejector air inlet. The air supply outlet on the chuck may also be a hole which is connected to the air channels formed in the chuck in which the pressured air can flow. Normally, pressurized air is supplied into the chuck for clamping the pallet from external pipes. Chuck is often mounted on the machine table and must not be changed frequently. During machining, pallet must be changed frequently. Thus, pallet must be automatically changeable to improve the machining sufficiency. Consequently, it is an advantage to provide the pallet without external connections with pipes. Preferably, the connection of the air inlet on the pallet and the air outlet on the chuck is sealed by a sealing element, for example a sealing ring. Preferably, this connection is sealed on the pallet and/or on the chuck.

In one variant, the pallet suction opening is covered by a filter, in particular the filter is a mesh filter. This can prevent dirt, or chips caused by machining falling into the suction opening. In particular, a sealing element is arranged around the pallet suction opening to ensure the suction when the object is place on the pallet suction opening.

In one variant, the fixture suction opening is covered by a filter, in particular the filter is a mesh filter. In particular, a sealing element is arranged around the fixture suction opening to ensure the suction when the object is place on the fixture suction opening.

In a preferred variant, the vacuum ejector is embedded in the pallet and the back valve is embedded in the fixture. Vacuum ducts are formed in the pallet and in the fixture to connect the ejector vacuum opening to the fixture suction opening. The fixture is moveably mounted on the pallet. In the clamping state, the pallet is clamped to the chuck and the object is sucked by the vacuum on the fixture. When the fixture is removed from the pallet, the back valve is closed, and the workpiece can be held on the fixture by the vacuum encapsulated in vacuum duct of the fixture. Preferably, the release valve is embedded in the fixture and is configured to be operated from the outside of the fixture. By opening the release valve, the vacuum is released, and the workpiece can be removed from the fixture.

In a preferred variant, the ejector vacuum opening is connected to the pallet suction opening through at least one channel and/or at least one hole. Depending on the size of the pallet, the pallet suction opening can have different dimensions and/or shapes. The dimension of the pallet suction opening is in most of applications different from the dimension of the ejector vacuum opening. In addition, the ejector vacuum opening can be positioned at different positions inside the pallet. Therefore, some connecting elements are needed to connect the ejector vacuum opening to the pallet suction opening.

In one variant, the pallet locking mechanism further comprises a drawbar having a tubular shape with a drawbar locking mechanism configured to interact with the chuck locking mechanism for clamping the pallet to the chuck. In this variant, the chuck has a hole and the locking mechanism is provided on the inner surface of the chuck. The drawbar locking mechanism is provided on its outer surface. The pallet is mounted on the drawbar. When the drawbar is inserted into the chuck, the drawbar locking mechanism is automatically engaged with the chuck locking mechanism.

In one variant, the clamping system comprises a chuck connector, in which the vacuum ejector is embedded. The chuck connector is a separate part and can be mounted into the chuck.

In one variant, the clamping system comprises a pallet connector, in which the back valve is embedded, in particular the release valve is embedded in the pallet connector. The pallet connector is a separate part.

In the clamped state of the clamping system the chuck connector is positioned in the chuck and the pallet connector is mounted on the top of the chuck connector which is at least partially surrounded by the drawbar, wherein the pallet is arranged on the drawbar and the fixture is mounted on the top of the pallet.

In some embodiments, vacuum ducts are formed in the chuck connector, in the pallet connector and in the fixture and they are configured to be communicatively connected to each other automatically, when the clamping system is in the clamping state.

In the present invention, the clamping system refers to the first clamping system or the second clamping system. The first clamping system and the second clamping system refers to two different embodiments of the clamping system. However, the vacuum ejector can also be applied in other clamping systems not only limited to these two clamping systems.

In a variant, a plurality of release valves is provided and each of a release valve is connected to one fixture suction opening to individually release the workpiece positioned above the different fixture suction openings.

### BRIEF DESCRIPTION OF THE DRAWINGS

In the following, a more particular description of the present invention is further described. The embodiments are described and explained with details with reference to accompanying drawings in which:
Fig.1 illustrates a three-dimensional view of a first pallet;
Fig.2 illustrates a side view of the first pallet;
Fig.3 illustrates a bottom view of the first pallet;
Fig.4 illustrates a top view of the first pallet;
Fig.5 illustrates a side view of the first pallet with a sectional view of a vacuum ejector;
Fig.6, Fig.7 illustrate an application of a first clamping system in unclamped state and clamped state, respectively;
Fig.8 illustrates a top view of a fist fixture;
Fig.9 illustrates a bottom view of the first fixture;
Fig. 10 illustrates a bottom view of the first fixture with the back valve therein;
Fig. 11 illustrates a sectional view of the first fixture;
Fig.12 illustrates a three-dimensional view of the back valve;
Fig.13 illustrates a sectional view of a piston;
Fig.14, Fig.15 illustrate the back valve in an open state and a closed state, respectively;
Fig.16 illustrates area sectional view of the release valve;
Fig.17 illustrates a second embodiment of the clamping system;
Fig.18 illustrates a three-dimensional view of a chuck connector;
Fig.19 illustrates a sectional view cut along the line B-B shown in the figure 18;
Fig.20 illustrates a three-dimensional view of the pallet connector;
Fig.21 illustrates a bottom view of the pallet connector;
Fig.22 illustrates a sectional view of the cut along the line C-C shown in the figure 20;
Fig.23 illustrates a schematic view of the clamping system; and
Fig.24 illustrates a three-dimensional view of the second clamping system.

### EXEMPLARY EMBODIMENTS

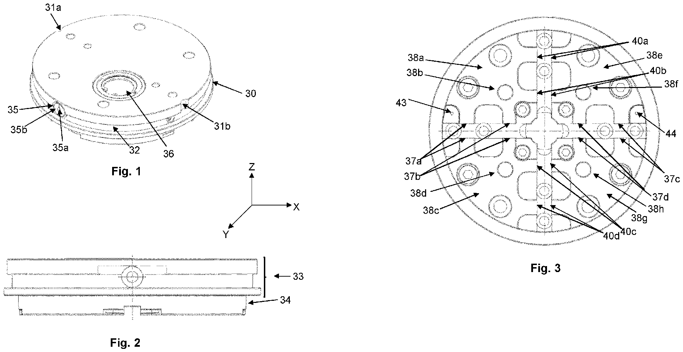

Figures 1 to 5 show a first pallet applied for a first clamping system.

Figure 1 depicts a three-dimensional view of a first pallet 30 applied for a first clamping system of the present invention. The first pallet has a round shape and a defined height. However, the pallet can have a different shape or height than the shapes shown in the figures. A first vacuum ejector is integrated inside the first pallet. A first ejector entry 35 is provided on the side surface of the first pallet, namely on its periphery. The first vacuum ejector is inserted through the first ejector entry into the first pallet and embedded in the first pallet. Additionally, the first ejector entry is covered by a first cap 35b to prevent the first vacuum ejector falling out of the first pallet. A first air outlet 35a is provided on the first cap to allow the air flowing out of the first vacuum ejector to flow out of the first pallet. A first pallet suction opening 36 is arranged on the top surface of the first pallet and connected to the first vacuum ejector inside the first pallet. A first pair of slots 31a, 31b and a first groove 32 are formed on the side surface of the first pallet for automatic handling. A robot can grip the first pallet at this position to automatically mount the first pallet to the first chuck or dismounted the first pallet from the first chuck.

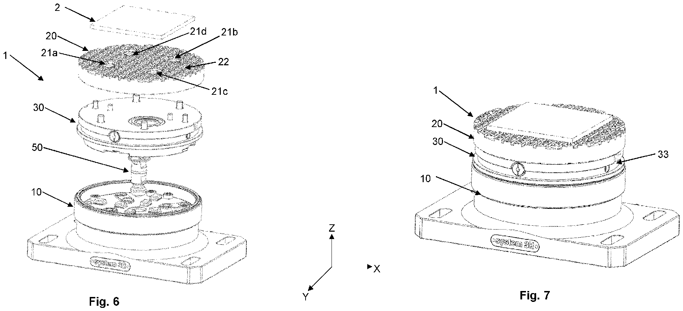

As shown in figure 2 illustrating a side view of the first pallet, the first pallet is made in one-piece. However, it can be divided into two sections in its height (Z-direction), namely an upper section 33 and a lower section 34. The lower section serves mainly for interaction with the chuck locking mechanism of a first chuck. When the first pallet is clamped into the first chuck, the lower section is positioned within the first chuck and the upper section stands at outside of the first chuck as shown in the figure 7. The first pair of slots and the first groove for automatic handling are normally provided on the upper section of the first pallet, such that the slots and the groove can be accessed by the robot gripper also in the clamped state. In the example shown in the figures, the first vacuum ejector is received in the upper section of the first pallet. However, it is not excluded to embed the first vacuum ejector in the lower section of the first pallet.

Figure 3 shows a bottom view of the first pallet. The pallet reference elements are provided on the pallet in X-, Y- and Z-directions. They are defined as pallet X reference element, pallet Y reference element and pallet Z reference element. A plurality of pallet X reference elements 37a, 37b, 37c, 37d, a plurality of pallet Y reference elements 40a, 40b, 40c, 40d and a plurality of pallet Z reference elements 38a, 38b, 38c, 38d, 38e, 38f, 38g, 38h, are provided on the bottom surface of the first pallet. In the variant shown in the figure 3, the reference elements are manufactured separately on a thin plate and fixed on the first pallet. However, it is also possible to form all reference elements directly on the first pallet forming one piece. Reference elements in X, Y and Z are also provided on the first chuck. They are defined as chuck X reference element, chuck Y reference element and chuck Z reference element. The reference elements are not shown in the figures. Typically, there are the same number of reference elements on the first pallet and on the first chuck.

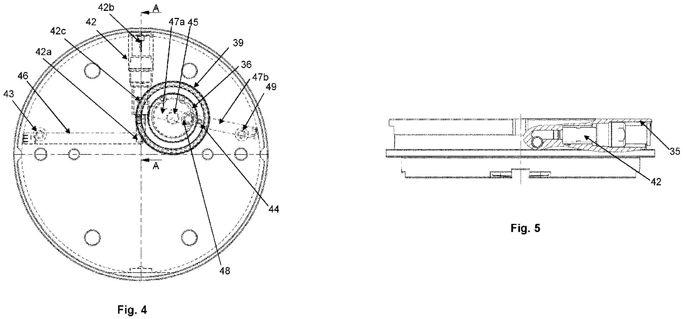

Figure 4 depicts a top view of the first pallet. Figure 5 illustrates a sectional view cut along the line A-A shown in the figure 4. The first vacuum ejector 42 has an elongated body and lies on a plane in parallel to the top surface of the first pallet such that the height of the pallet is not increased. However, it is not excluded to arrange the first vacuum ejector in another direction. Moreover, the vacuum ejector extends from the first ejector entry 35 into the center of the first pallet. The first vacuum ejector has a first ejector inlet, a first ejector outlet and a first ejector vacuum opening. In this example, pressurized air is the motive fluid of the vacuum ejector. In order to avoid additional pipes for supplying the pressurized air into the vacuum ejector, the first ejector inlet is connected to a first air inlet 43 by a first air channel 46 enable to use the pressurized air provided to the first chuck. By this way, no additional external pipes are needed to supply the pressurized air into the ejector. This is advantageous for allowing the automatic pallet changing. The first air inlet 43 is provided as a position, where the pressured air coming from the first chuck can be automatically supplied into the first air inlet. Thus, in this example, the first air inlet 43 is formed as a hole on the bottom surface of the first pallet and connected to the first air channel 46. The first chuck is provided with a first air supply outlet on its top surface. When the first pallet is clamped to the first chuck, the first air inlet 43 of the first pallet is precisely aligned with the first air supply outlet of the first chuck such that the pressurized air supplied into the first chuck can further flow into the ejector through the air channels in the chuck, the first air supply outlet of the chuck, the first air inlet of the first pallet and the first air channel of the first pallet.

The first ejector vacuum opening is connected to the first pallet suction opening 36 through a first vacuum suction channel 47a and a first vacuum hole 45 embedded in the first pallet. One end of the first vacuum suction channel is directly connected with the ejector vacuum opening. The first vacuum hole is a drilled substantially in the vertical direction to connect the pallet suction opening and the first vacuum channel. On the one hand, the suction opening on the surface of the pallet should be large enough to provide a large area where the object can be sucked by the vacuum. On the other hand, it is to be avoided to bore a large hole in the pallet. Providing the first vacuum hole can fulfill both requirements, because it transfers the generated vacuum from the ejector to the pallet suction opening and the first vacuum hole is much smaller than the first pallet suction opening. However, it is also possible to directly connect the first vacuum channel to the first pallet suction opening.

Security of the clamping status is also important to ensure the proper machining process, thus, it must be guaranteed that the workpiece is properly held by the vacuum generated by the vacuum ejector. Thus, monitoring the vacuum condition generated by the vacuum ejector can improve the reliability of the system and the security of the machining. As shown in the figure 4, a vacuum sensing arrangement is provided in the first pallet. A first sensing hole 49 is formed on the bottom surface of the first pallet. The first sensing hole is communicatively connected with the first vacuum suction channel. Therefore, the vacuum sensed at the position of the first sensing hole represents also the vacuum condition generated by the ejector. One end of the first sensing hole 49 for monitoring the vacuum is formed on the bottom surface of the first pallet, such that it can be aligned to a sensing hole formed on the first chuck. When the chuck is mounted on the machine table, a vacuum sensing device arranged in the machine table can be communicatively connected to the vacuum sensing hole on the chuck and further connected to the first sensing hole 49 of the first pallet automatically by clamping the first pallet to the first chuck. By this way, no additional sensing device is needed in the clamping system.

In this example shown in the figure 4, the first sensing hole 49 is not directly connected to the first vacuum suction channel 47a but directly connected to the first pallet suction opening through a first vacuum connecting hole 44 and a first vacuum sensing channel 47b. As shown in the figure 4, a first plug 48 is arranged at one end of the first vacuum suction channel in the vertical direction to cut the flow of the vacuum further in the direction of the sensing hole. The first vacuum connecting hole is arrange in the vertical direction to connect the first pallet suction opening to a first vacuum sensing channel 47b, with which the first sensing hole is connected. Such arrangement is to further improve the reliability of the vacuum monitoring. Basically, the first vacuum suction channel 47a and the first vacuum sensing channel 47b can be seen as one channel and cut by the first plug into two sections.

Figures 6 and 7 show one application of the first clamping system, in which a first fixture 20 is arranged between the first pallet and the workpiece. Figure 6 illustrates a three-dimensional view of the first clamping system 1 with the first fixture in an unclamped state. This example shows an application of clamping the workpiece on a machine table. The first chuck 10 can be mounted on the machine table which is not shown. The first pallet 30 can be clamped through a drawbar 50 into the chuck. In this example, a drawbar is provided for connecting the first chuck and the first pallet, but it is not mandatory to utilize the drawbar, since other locking mechanism is also possible for clamping the chuck and the pallet. On the top of the first pallet, the first fixture can be mounted. The first fixture has at least one first fixture suction opening 21a, 21b, 21c, 21d for allowing the vacuum going through the opening to hold the workpiece mounted thereon. The first fixture suction openings are through holes. In addition, a plurality of fixture channels is formed on the bottom surface of the first fixture to connect the first fixture suction openings to the first pallet suction opening. By this way, the vacuum generated by the vacuum ejector can go through the first pallet suction opening and the fixture openings to reach the workpiece. Moreover, different suction areas can be activated by inserting a first fixture sealing element into the sealing groove 22 into the first fixture. For example, the first fixture shown in figure 6 has four first fixture suction openings, therefore, the whole surface of the fixture can be divided into four suction areas, each of which is defined around one first fixture suction opening.

Figure 7 shows the state when the workpiece is held by the vacuum on the first fixture and the first pallet is clamped into the first chuck.

Several sealings, e.g. O-rings are provided around the first pallet suction opening and the first fixture suction openings for sealing.

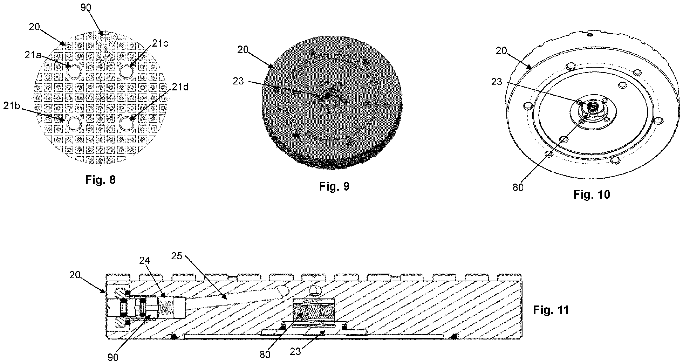

Figure 8 shows a top view of the first fixture 20 with a partially cut for exposing a release valve 90.

Figure 9 and figure 10 illustrate the bottom view of the first fixture. In the center of the bottom surface the first fixture back valve hole 23 is provided for inserting a back valve therein. Figure 10 shows the fixture having the back valve therein. This hole is normally covered by a lid to prevent the back valve from falling out of fixture. It is also possible to position this hole at other positions of the bottom or surface.

Figure 11 shows a sectional view of the first fixture. On the side surface of the first fixture a release valve hole 24 is provided for inserting the release valve therein. The release valve is connected to a vacuum connection channel 25 which is connected to the first fixture vacuum openings. When the valve is in a closed state, the vacuum is held in this channel and the workpiece on the top of the fixture can be held by the vacuum. When the valve is in an open state, the vacuum in this channel is released such that the workpiece on the top of the fixture can be removed. The release valve hole can also be arranged at the other positions of the first fixture.

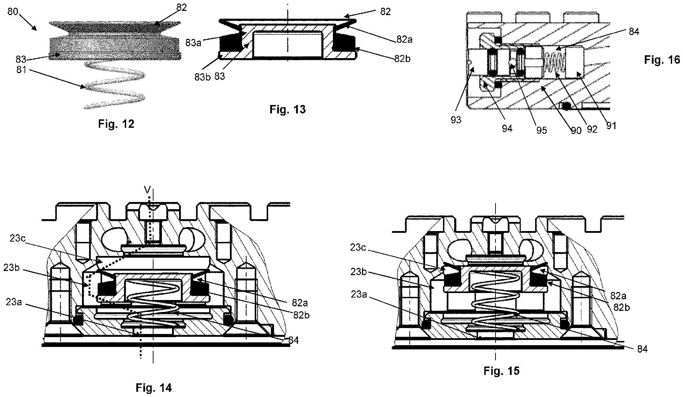

Figure 12 shows a three-dimensional view of the back valve 80. It comprises a piston 83 with a sealing element 82 and a spring 81 fixed on the bottom surface of the piston. In the variant shown in the figures, a lip seal is applied as the sealing element. However, it is also possible to use other types of sealing element.

Figure 13 illustrates a sectional view of the piston. The piston includes two parts. The first part 83 is made of metal or plastic/rubber having two sections, an upper section 83a and a lower section 83b. These two sections are formed in one piece, this could also be made in one single piece made of rubber material. Both sections have a cylindrical shape but different diameters. It is also possible that upper section and lower section have the same diameter. In the variant shown in the figures, the upper section has a smaller diameter than the lower section. The second part is a lip seal 82 which includes an upper portion 82a and a lower portion 82b. A hollow is formed inside the lip seal such that the first part can be inserted into the hollow to form the piston. When the piston is assembled, the upper section of the first part is surrounded by the lip seal and the lower portion of the lip seal sits on the top surface of the lower section of the first part. In this example, a V-shaped groove is formed between the upper portion and the lower portion of the lip seal such that the lip seal can be pressed for sealing. Piston and sealing element can be made out of one single part made in rubber, it's not limited to be two separate parts.

Figures 14 and 15 depict the back valve in an open state and a closed state, respectively.

In the example shown in the figures 14 and 15, the back valve hole is divided into three segments. A first segment of the back valve hole 23a is the lowest part and it is connected with the first pallet suction opening when the fixture is mounted on the top of the pallet. A third segment of the back valve hole 23c is communicatively connected to the first fixture suction openings directly or through channels. A second segment of the back valve hole 23b connects the first segment and the second segment. The diameter of these segments is different, in particular the second segment has the largest diameter among these three segments for allowing vacuum better passing through the back valve in the open state. When the vacuum is generated, the suction from the pallet suction opening will pull piston downwardly and compress the spring. The lip seal moves also downwardly and is positioned in the second segment of the back valve hole. Since the second segment has larger diameter than the third segment, a gap is formed between the inner surface of the back valve hole and the outer surface of the lip seal. Consequently, a vacuum passage is formed which is indicated on the figure 14 by the dotted line V. When the vacuum is turned off, the spring presses the piston upwardly the upper portion of the lip sealing 82a moves into the third segment of the back valve hole 23c. The diameter of the upper portion of the lip sealing is designed in accordance with the inner diameter of the third segment of the back valve hole such that a reliable sealing can be achieved. In this state, the vacuum is encapsuled within the first fixture, in particular in the space between the third segment of the back valve hole and the first fixture suction openings.

Figure 16 illustrates a sectional view of the release valve. It comprises a pin 93 having an elongated and cylindrical shape body. A release spring 92 is fixed on the one end of the pin. A stopper 91 is mounted on the other end of the spring. A housing 94 is partially surrounded the pin. The release valve is inserted in the release valve hole 84 formed in the fixture. In order to ease the operating of the release valve, one end of the hole is located on the side surface of the first fixture such that the pin can be pushed from the outside manually. However, it is not excluded to operate the release valve automatically. The release valve hole is connected through a connection channel 25 as shown in the figure 11 to the first fixture suction openings. By pushing the pin the vacuum encapsuled within the first fixture can be released so that the workpieces held by the vacuum on the top of the first fixture can be removed. The pin has a hollow and on the side wall of the hallow a release hole 95 is provided. In the closed state, the release hole is covered by the housing and thus is not connected to the vacuum connection channel. By pushing the pin, the spring is compressed against the stopper and the hole is moved out of the housing. Thus, the hollow of the release valve is connected to the vacuum connection channel through the release hole. Since the open end of the hollow is exposed to the air, the vacuum encapsuled in the first fixture is released.

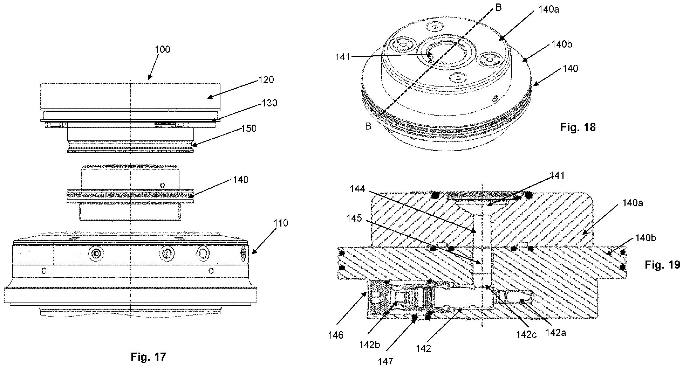

Figure 17 shows a second embodiment of the clamping system 100. It comprises a second pallet 130, a second chuck 110, a drawbar 150 for connecting the second pallet and the second chuck, a second fixture 120 for carrying a workpiece, a chuck connector 140 for providing the vacuum and a pallet connector for keeping the vacuum. The pallet connector is not shown in this figure.

Figure 18 illustrates a three-dimensional view of the chuck connector 140.

Figure 19 illustrates a sectional view cut along the line B-B shown in the figure 18. In this example, the chuck connector has a cylindrical shape and comprises an upper part of chuck connector 140a and a lower part of chuck connector 140b. However, it is also possible to provide the chuck connector as one part. On the top surface of the upper part 140a a chuck connector suction opening is formed. A second vacuum ejector 142 is inserted in a recess provided in the lower part of chuck connector 140b. The second vacuum ejector 142 has an elongated body and lies on a plane in parallel to the top surface of the chuck connector such that the height of the chuck connector is not increased. However, it is not excluded to arrange the second vacuum ejector in another direction. Moreover, the vacuum ejector extends from a second ejector entry 146 into the center of the chuck connector. The second vacuum ejector has a second ejector inlet 142a, a second ejector outlet 142b and a second ejector vacuum opening 142c. In this example, pressurized air is the motive fluid of the vacuum ejector. In order to avoid additional pipes for supplying the pressurized air into the vacuum ejector, the second ejector inlet is connected to an air outlet provided on the machine table such that the pressurized air provided in the machine table can be supplied to the vacuum ejector. By this way, no additional external pipes are needed to supply the pressurized air into the ejector. The air inlet is provided as a position, where the pressured air coming from the machine table can be automatically supplied into the air inlet, when the chuck connector is mounted on the machine table. Additionally, the second ejector outlet is connected to an air outlet integrated in the machine table through an air release hole 147 formed on the bottom surface of the lower part. The air release hole is communicatively connected with the second ejector outlet. By this way, the pressurized air can be released. The second ejector vacuum opening is connected to the chuck connector suction opening through a lower vacuum channel of chuck adaptor 145 and an upper vacuum channel of chuck connector 144.

The chuck connector is normally mounted directly on the machine table by for example screws. On the top of it the pallet connector is mounted. Thus, a chuck connector locking mechanism 143 shown in the figure 18 is arranged on the top surface of the upper part of the chuck connector for connecting the pallet connector.

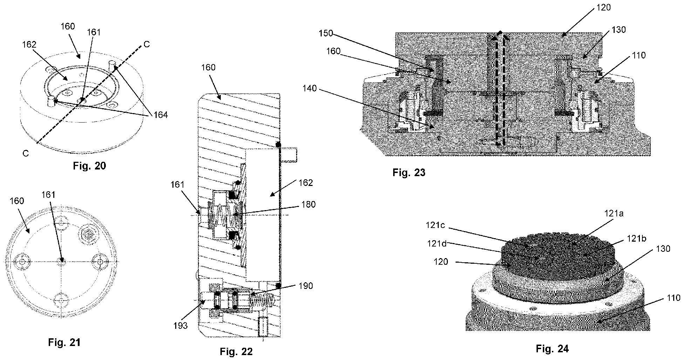

Figure 20 shows a three-dimensional view of the pallet connector 160. It has a cylindrical shape and has a large opening from the top surface forming a pallet connector vacuum chamber 162. A hole is provided on the bottom of the vacuum chamber serving as a pallet connector suction opening 161. Two pallet connector fixing screws are mounted on the top surface of the pallet connector for holding the second fixture on the top of the pallet connector.

Figure 21 illustrates a bottom view of the pallet connector. It can be seen that the pallet connector suction opening is a through hole for allowing the vacuum generated in the chuck connector passing through the it when the pallet connector is mounted on the top of the chuck connector.

Figure 22 illustrates a sectional view of the cut along the line C-C shown in the figure 20. A second back valve 180 is embedded in the pallet connector. Additionally, a second release valve 190 is embedded in the pallet connector as well.

Figure 23 shows a schematic view of the clamping system. It is aimed to show how the different parts of the second clamping system are arranged in the clamped state and how the vacuum generated by the vacuum ejector passes through the different parts, therefore, not all details are shown in this figure. When the clamping system is applied to hold a workpiece, the chuck connector 140 is first mounted on the machine table. The second chuck 110 is then mounted on the machine table as well. The second chuck has a hollow, thus, the chuck connector is positioned in the hollow of the second chuck. The second drawbar is a connecting element to clamping the pallet to the chuck. It has a cylindrical shape with a hollow. The second pallet 130 is mounted on the top section of the drawbar. Then the drawbar with the pallet is inserted into the second chuck and clamped to the chuck by locking mechanism. In the clamped state, drawbar surrounds the pallet connector. A second fixture 120 is mounted on the top of the second pallet. In this embodiment, the second pallet has a ring shape, thus the second pallet surrounds also the pallet connector in the clamped state and the fixture can be fixed by the pallet connector fixing screws 164 on the top of it. The arrow on the figure 23 indicates the vacuum path. Since the back valve is arranged just below the pallet connector suction opening, the vacuum path must pass through the back valve. When the back valve is in the open state, the vacuum can pass through it from the chuck connector to the second fixture. When the back valve is in the closed state, the vacuum is blocked by the back valve. Therefore, the fixture and the pallet connector can be removed from the clamping system.

The figure 24 shows a three-dimensional view of a part of the second clamping system. Four second fixture suction openings 121a, 121b, 121c and 121d are formed on the second fixture for supplying the vacuum to hold the workpiece thereon.

### LIST OF REFERENCES

1 first clamping system
2 workpiece
10 first chuck
20 first fixture
21a, 21b, 21c, 21d first fixture suction opening
22 first fixture sealing groove
23 back valve hole
23a first segment of the back valve hole
23b second segment of the back valve hole
23c third segment of the back valve hole
24 release valve hole
25 vacuum connection channel of the release valve
30 first pallet
31a,31b first pair of slots
32 first groove
33 upper section of the first pallet
34 lower section of the first pallet
35 first ejector entry
35a first air outlet
35b first cap
36 first pallet suction opening
37a, 37b, 37c, 37d X reference element on the first pallet
38a, 38b, 38c, 38d, 38e, 38f, 38g, 38h Z reference element on the first pallet
39 a first sealing
40a, 40b, 40c, 40d Y reference element on the first pallet
42 first vacuum ejector
42a first ejector inlet
42b first ejector outlet
42c first ejector vacuum opening
43 first air inlet
44 first vacuum connecting hole
45 first vacuum hole
46 first air channel
47a first vacuum suction channel
47b first vacuum sensing channel
48 first plug
49 first sensing hole
80 first back valve
81 spring
82 lip seal
82a upper portion of the lip sealing
82b lower portion of the lip sealing
83 piston
83a upper section of the piston
83b lower section of the piston
90 first release valve
91 stopper
92 spring of release valve
93 pin
94 housing
95 release hole
100 second clamping system
110 second chuck
120 second fixture
121a, 121b, 121c, 12d second fixture suction opening
125 second fixture sealing groove
130 second pallet
140 chuck connector
140a upper part of chuck connector
140b lower part of chuck connector
141 chuck connector suction opening
142 second vacuum ejector
142a second ejector inlet
142b second ejector outlet
142c second ejector vacuum opening
144 upper vacuum channel of chuck adapter
145 lower vacuum channel of chuck connector
146 second vacuum ejector entry
147 air release hole
150 drawbar
160 pallet connector
161 pallet connector suction opening
162 pallet connector vacuum chamber
163 pallet connector vacuum locking mechanism
164 pallet connector fixing screws
180 second back valve
190 second release valve

## Claims

1. A clamping system comprising a chuck (10, 110) and a pallet (30, 130) for mounting an object (2, 20) on a clamping surface, wherein the chuck comprises a plurality of chuck reference elements in X-, Y- and Z-directions, wherein the pallet comprises a plurality of pallet reference elements (37a, 37b, 37c, 37d, 40a, 40b, 40c, 40d, 38a, 38b, 38c, 38d) in X-, Y- and Z directions, wherein the pallet includes a pallet locking mechanism and the chuck includes a chuck locking mechanism, wherein in the clamping state, the pallet is clamped to the chuck by interacting the pallet locking mechanism with the chuck locking mechanism and the pallet reference elements are aligned with the chuck reference elements in X-, Y- and Z-directions, wherein the clamping system comprises a vacuum ejector (42, 142) configured to generate a vacuum, wherein the vacuum ejector has an ejector inlet (42a, 142a) for supplying the pressurized air therein and an ejector vacuum opening (42c, 142c) for providing the vacuum, wherein a suction opening is provided on the clamping surface and configured to be communicatively connected to the ejector vacuum opening for holding the object positioned on the suction opening by the vacuum generated by the vacuum ejector when the pallet is clamped to the chuck,
**characterized in that**
the clamping system further comprises a back valve, which is configured to be positioned between the suction opening and the ejector vacuum opening in the clamping state, wherein the back valve is configured to operate in an open state or in a closed state, wherein in the open state the vacuum generated by the vacuum ejector passes through the back valve to the suction opening and in the closed state the vacuum is maintained between the back valve and the suction opening for keeping the object on the suction opening without communicative connection between the vacuum ejector and the suction opening.

2. The clamping system according claim 1, wherein at least one vacuum duct is provided in the clamping system and configured to communicatively connect the ejector vacuum opening and the suction opening, in particular the back valve is arranged in the vacuum duct.

3. The clamping system according to claim 1 or 2, wherein a sealing is arranged around the suction opening to seal the area around the suction opening.

4. The clamping system according to one of claims 1 to 3, wherein the clamping surface is the top surface of the pallet and a pallet suction opening is formed on this surface serving as the suction opening, in particular, the vacuum ejector is embedded inside the chuck and the back valve is embedded inside the pallet.

5. The clamping system according to one of claims 1 to 3, wherein the clamping system comprises a fixture (30, 130) moveably mounted on the top of the pallet, wherein the clamping surface is the top surface of the fixture and at least one fixture suction opening (21a, 21b, 21c, 21d, 121a, 121b, 121c, 121d) is formed on this surface serving as the suction opening.

6. The clamping system according to claim 5, wherein the vacuum ejector is embedded inside the pallet and the back valve is embedded inside the fixture.

7. The clamping system according to one of claims 1 to 5, wherein the vacuum ejector and the back valve are arranged in the different parts of the clamping system.

8. The clamping system according to one of claims 1 to 6, wherein the back valve is configured to automatically operate in the open state when the vacuum is supplied by the vacuum ejector and to automatically operate in the closed state when no vacuum is provided by the vacuum ejector.

9. The clamping system according to one of claims 1 to 7, wherein the back valve includes a piston (80) and a spring (81) fixed on the bottom surface of the piston, in particular the piston comprises a first part having a cylindrical shape and a bottom surface with the spring fixed thereon and a sealing element (82) having a hollow, wherein the first part is at least partially inserted in the hollow of the sealing element.

10. The clamping system according to one of claims 1 to 8, wherein a back valve hole is arranged in the vacuum duct for receiving the back valve therein, in particular the back valve hole is a section of the vacuum duct.

11. The clamping system according to one of claims 1 to 9, wherein a release valve is arranged in the clamping system and communicatively connected to the back valve and configured to release the vacuum provided for holding the object, when the release valve is opened.

12. The clamping system according to one of claims 1 to 10, wherein the pallet locking mechanism further comprises a drawbar (150) having a tubular shape with a drawbar locking mechanism configured to interact with the chuck locking mechanism for clamping the pallet to the chuck.

13. The clamping system according to claim 12, wherein the clamping system comprises a chuck connector (140), in which the vacuum ejector is embedded.

14. The clamping system according to claim 12 or 13, wherein the clamping system comprises a pallet connector, in which the back valve is embedded, in particular the release valve is embedded in the pallet connector.

15. The clamping system according to one of claims 12 to 14, wherein in the clamped state of the clamping system the chuck connector is positioned in the chuck and the pallet connector is mounted on the top of the chuck connector which is at least partially surrounded by the drawbar, wherein the pallet is arranged on the drawbar and the fixture is mounted on the top of the pallet.
